# EUROPÄISCHE PATENTSCHRIFT

(11) **EP 0 703 251 B1**
(45) Veröffentlichungstag und Bekanntmachung des Hinweises auf die Patenterteilung: **10.12.1997**
(21) Anmeldenummer: 95114454.2
(22) Anmeldetag: 14.09.1995
(51) Int. Cl.: C08F 255/00, C08F 2/34

(54) **Verfahren zur Pfropfung von Polyolefinen**
Process for grafting polyolefins
Procédé de greffage de polyoléfines

(30) Priorität: 26.09.1994 AT 1826/94
(43) Veröffentlichungstag der Anmeldung: 27.03.1996
(73) Patentinhaber: PCD-Polymere Gesellschaft m.b.H., A-2323 Schwechat-Mannswörth (AT)
(72) Erfinder: Rätzsch, Manfred, A-4202 Kirchschlag (AT); Hesse, Achim, Dr., D-01067 Dresden (DE); Bucka, Hartmut, Dipl.-Ing., A-4060 Leonding (AT)
(74) Vertreter: Kunz, Ekkehard, Dr.

(56) Entgegenhaltungen:
- EP-A- 0 138 224
- PATENT ABSTRACTS OF JAPAN, unexamined applications, C Field, Band 16, Nr. 413, 2. September 1992 THE PATENT OFFICE JAPANESE GOVERNMENT Seite 157 C 980; & JP-A-04 142 316 (MITSUI PETRO CHEM)
- PATENT ABSTRACTS OF JAPAN, unexamined applications, C Field, Band 13, Nr. 21, 18. Januar 1989 THE PATENT OFFICE JAPANESE GOVERNMENT Seite 103 C 560; & JP-A-63 225 609 (CHISSO CORP)

## Beschreibung

Die Erfindung betrifft ein Verfahren zur Pfropfung von Polyolefinen in einem Fließbettreaktor. Es ist bekannt, Polyolefine in Anwesenheit radikalbildender Initiatoren oder durch Radikalbildung mit energiereichen Strahlen mit polymerisierbaren Monomeren, wie z.B. ethylenisch ungesättigten Verbindungen zu pfropfen.
Beispielsweise wird in der EP-A-437 808 ein Pfropfverfahren beschrieben, bei dem Polyolefine in fester Form mittels Elektronenstrahlen bestrahlt und anschließend in einem Reaktor mit den flüssigen bzw. gelösten Pfropfmonomeren besprüht und gepfropft werden. Gemäß JP-A-63/90523 bzw. DD-PS-275 159 erfolgt die Pfropfreaktion von Polypropylen in wäßriger Dispersion, wobei als Radikalbildner Peroxyde oder Azoverbindungen verwendet werden. Der Nachteil der bekannten Pfropfverfahren liegt vor allem darin, daß lange Reaktionszeiten erforderlich sind, bzw. daß die Ausbeuten an gepfropften Polyolefinen nur sehr gering sind.

Es bestand demnach die Aufgabe, ein betriebssicheres Pfropfverfahren für Polyolefine zu finden, bei dem qualitativ hochwertige gepfropfte Polyolefine, insbesondere mit guter Homogenität sowie mit hoher Raum/Zeitausbeute herstellbar sind. Die Lösung der Aufgabe wurde in der Verwendung eines Polyolefin-Fließbettes zur Durchführung der Pfropfreaktion gefunden, das mittels Wasserdampf fluidisiert wird.

Gegenstand der Erfindung ist demnach ein Verfahren zur Herstellung von gepfropften Polyolefinen, bei dem ethylenisch ungesättigte Pfropfmonomere und gegebenenfalls Radikalbildner mit festen Polyolefinteilchen, die ein Fließbett bilden, in Kontakt gebracht werden, dadurch gekennzeichnet, daß das Polyolefin-Fließbett durch Einblasen von Wasserdampf und gegebenenfalls von C₁- bis C₈-Alkanoldämpfen fluidisiert wird.
Mit dem erfindungsgemäßen Verfahren ist es insbesondere möglich, gepfropfte Olefin-Homo- oder -Copolymere in einem kontinuierlichen Prozeß mit hoher Raum/Zeitausbeute und mit guter Homogenität sowie einem großen Variationsbereich der Prozeßbedingungen bei Gewährleistung eines sicheren Betriebes auch mit schwer fließenden, zum Verkleben untereinander und an den Wänden neigenden Feststoffen zu entwickeln. Unter Prozeßbedingungen sind dabei vor allem die Reaktionstemperatur, der Reaktionsdruck und die Konzentrationen der an der Reaktion beteiligten Komponenten zu verstehen.
Daneben ist die Verweilzeitverteilung von wesentlicher Bedeutung für die Struktur und Eigenschaften der Polymeren. Für die Herstellung von homogenen Produkten ist es unumgänglich, enge Verweilzeitverteilungen, wie sie mit dem erfindungsgemäßen Verfahren ermöglicht werden, zu realisieren.

Die zur Pfropfung eingesetzten Polyolefine werden nach üblichen Verfahren, wie z.B. durch Lösungs-, Slurry- oder Gasphasepolymerisation hergestellt. Als Polyolefine sind beispielsweise die Homo- oder Copolymeren von Ethylen, Propylen, 1-Buten, 1-Hexen, 4-Methyl-1-penten, 1-Octen oder Cyclopenten möglich. Bevorzugt sind die Homo- und Copolymeren von Ethylen, Propen und 1-Buten. Besonders bevorzugt sind Polypropylene und Propylen-Ethylen-Copolymere.

Die Pfropfung gestaltet sich besonders einfach, wenn sie direkt im Anschluß an die Polymerisation erfolgt. Dabei wird das quasikontinuierlich aus einem Gasphasenreaktor oder aus der Flashkammer eines Slurryreaktors ausgetragene Polyolefin mit überhitztem Dampf eines Gemisches aus Wasser und gegebenenfalls eines Alkanols, wie z.B. Methanol oder Äthanol, in einen fluidisierten Rührbettreaktor gefördert und dabei auf Reaktionstemperatur aufgeheizt. Die Reaktion wird bevorzugt bei einem Druck von 0,1 bis 5 bar, besonders bevorzugt bei 0,5 bis 3 bar und bei einer Temperatur von 60 bis 150 °C, besonders bevorzugt bei 90 bis 130 °C durchgeführt.

Außer Methanol- oder Äthanoldampf können dem zur Fluidisierung des Fließbettes eingesetzten Wasserdampf auch Dämpfe von C₃- bis C₈-Alkanolen Zugesetzt werden. Die Verwendung von C₁- bis C₄-Alkanolen ist bevorzugt, besonders bevorzugt wird Methanol zugesetzt. Als Fluidisierungsmittel kann Wasserdampf entweder allein oder im Gemisch mit Alkanolen eingeblasen werden, wobei das Dampfgemisch aus 0,1 bis 1,0, bevorzugt 0,4 bis 1,0 Gewichtsteilen Wasser und 0 bis 0,9, bevorzugt 0 bis 0,5 Gewichtsteilen Alkanol besteht.

Bei den erfindungsgemäß verwendeten Pfropfmonomeren handelt es sich um Vinylmonomere, wie sie beispielsweise in EP-A-437 808 oder in DE-OS-43 30 356 beschrieben sind. Typische Beispiele dafür sind ethylenisch ungesättigte Carbonsäuren oder deren Derivate, wie z.B. Anhydride, Ester, Amide, Nitrile oder Halogenide, Vinyl-substituierte aromatische oder heteroaromatische Verbindungen oder aliphatische Vinylverbindungen bzw. deren Mischungen. Bevorzugte Pfropfmonomere sind Verbindungen aus der Gruppe der ungesättigten Carbonsäuren bzw. deren Derivaten, der Vinyl- oder Divinylaromaten und der aliphatischen Diene. Besonders bevorzugt sind Maleinsäureanhydrid, Styrol, Acrylnitril, Methacrylnitril, Acrylsäureester und Methacrylsäureester.

Im Falle der Verwendung von Radikalbildnern werden insbesondere peroxidische Initiatoren, wie z.B. Perester, Diacylperoxide, beispielsweise Dilauroyl-und Dibenzoylperoxid, Dialkylperoxidcarbonate, beispielsweise Diisopropyl- und Di-(2-ethylhexyl)peroxidicarbonat, Peroxyketale, Alkylperoxide oder Diazoverbindungen, wie z.B. 2,2'-Azo-bis(isobutyronitril) eingesetzt. Weitere mögliche Radikalbildner sind beispielsweise in EP-A-461 881 beschrieben. Bevorzugt als Radikalbildner sind organische Peroxide mit Halbwertszeiten von 4 bis 40 min bei 100 °C, wie z.B. t-Butylperoxypivalat, t-Butylperoxy-2-ethylhexanoat und Dibenzoylperoxid.

Pfropfmonomere und Radikalbildner können entweder direkt den zu pfropfenden Polyolefinen zugesetzt werden, in einem bevorzugten Verfahren werden die Pfropfmonomeren und gegebenenfalls die Radikalbildner gemeinsam mit dem Dampf zur Fluidisierung des Fließbettes eingeblasen.

Das in den unteren Teil des Fließbettes eingeblasene Dampfgemisch besteht vorzugsweise aus 0,1 bis 1,0 Anteilen Wasser, 0 bis 0,9 Anteilen Methanol, 0,1 bis 0,9 Anteilen Pfropfmonomeren und 0 bis 0,03 Anteilen des Radikalbildners.

Das fluidisierte Fließbett besteht bevorzugt aus Polypropylen-Pulver oder -Granulat. Es kann zusätzlich durch Schaufeln, die auf einer Welle montiert sind, bewegt und so besonders effektiv am Koagulieren gehindert werden. Durch eventuelle weitere geeignete Einbauten wird eine Rückvermischung des Granulates weitestgehend verhindert.

Durch übliche Verfahrensweisen, wie z. B. Absenken des Druckes und Erhöhen der Temperatur, wird ein Großteil der im gepfropften Polyolefin gelösten Monomeren entfernt. Die dabei abgesaugten Monomerdämpfe werden verdichtet, gekühlt und wieder dem Dampfkreislauf des Reaktors zugeführt.

In einem weiters bevorzugten Verfahren werden die gepfropften Polyolefine im Anschluß an die Pfropfreaktion aufgeschmolzen und mit Maleinsäureanhydrid (MSA) in Kontakt gebracht, wobei ein Großteil eventuell noch nicht umgesetzter Restmonomerer entfernt wird. Die Reaktion verläuft insbesondere im Fall von verbliebenem Rest-Styrol besonders gut. Das Aufschmelzen erfolgt bevorzugt in einem Extruder, vorzugsweise in einem Zweischneckenextruder, wobei das MSA bevorzugt als Lösung in einem leichtflüchtigen Lösungsmittel, wie z.B. Aceton zugegeben wird.

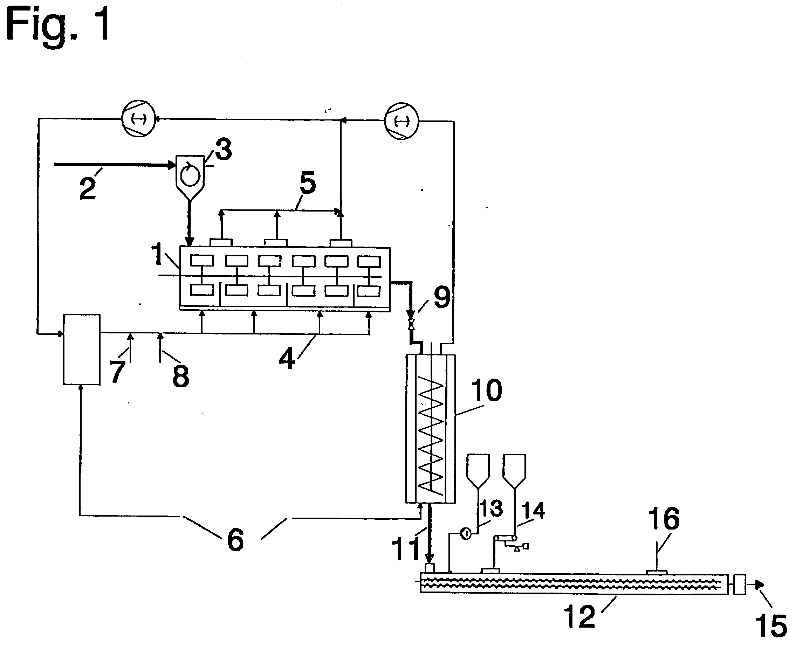

Das Fließbett kann entweder in einem stehenden oder liegenden Reaktor aufrecht erhalten werden. In Fig. 1 ist beispielhaft eine besonders bevorzugte Verfahrensvariante mit einem liegenden Reaktor (1) aufgezeigt. (2) bezeichnet die Zuführung des Polyolefins, (3) einen Pulverabscheider. Das Polyolefinpulver wird durch ein im Kreislauf geführtes Gasgemisch (4), das Wasserdampf (6), gegebenenfalls Alkanoldämpfe, Pfropfmonomere (7) und Radikalbildner (8) enthält, fluidisiert. Die Zugabe der Radikalbildner und Pfropfmonomeren erfolgt gegebenenfalls über geeignete Verdampfer. Das bei (5) aus dem Reaktor (1) austretende Kreislaufgas, das insbesondere noch nichtabsorbierte Pfropfmonomere, Wasserdampf und gegebenenfalls Alkanoldämpfe enthält, wird mit einem Kreisgaskompressor verdichtet und wieder in den unteren Teil des Reaktors (1) gefördert. Nach einer Verweilzeit von ca. 30 bis 150 min gelangt das modifizierte Polyolefin, das noch nichtumgesetzte Pfropfmonomere und Radikalbildner enthalten kann, über eine Schleuse (9) in den Nachreaktor (10), durch den Wasserdampf (6), der gegebenenfalls geringe Mengen an leichtflüchtigen Stabilisatoren enthält, im Gegenstrom gefördert wird. Anschließend wird das Polyolefin aus dem Nachreaktor (10) kontinuierlich in einen Extruder (12) gefördert, wo es in der Eingangszone aufgeschmolzen wird. Bei (13) können leichtflüchtige Lösungsmittel wie z. B. Aceton oder Wasser, die gegebenenfalls reaktive Komponenten wie z. B. Maleinsäureanhydrid enthalten, bei (14) Polymerhilfsmittel wie z. B. Stabilisatoren, Gleitmittel, Antiblockmittel, Füllstoffe, etc. zugegeben werden.
Nach der praktisch vollständigen Entfernung aller nichtumgesetzten Pfropfmonomeren durch eine Vakuumentgasung (16) wird die Polyolefin-Schmelze mit einer Unterwassergranulierung (15) granuliert.

### Beispiel 1:

In einem mit Schaufeln gerührten Fließbettreaktor (1) mit einem Füllvolumen von 0,4 m³, wie er in Fig. 1 schematisch gezeigt wird, wurden bei (2) 200 kg/h Polypropylenpulver (PP-Homopolymer, MFI 3 dg/min, Fa. PCD-Polymere) pneumatisch zugeführt. Das Fließbett wurde mit 950 Nm³/h eines Kreislaufgases (4), das aus 40 mol% Wasser, 58 mol% Styrol und 2 mol% t-Butylperoxy-2-ethylhexanoat (Akzo) bestand, aufrecht erhalten. Die Temperatur im Reaktor lag bei 110°C, der Druck bei 0,19 bar, die mittlere Verweilzeit des Polypropylens betrug 60 min. Anschließend wurde das gepfropfte Polypropylen kontinuierlich in den Nachreaktor (10) gefördert (103°C, 0,09 bar), in einem Zweischnecken-Extruder mit einem L/D-Verhältnis von 30 bei 250°C unter Zusatz von 0,25 kg/h eines 1 : 1 Stabilisatorgemisches aus Irgaphos 168 und Irganox 1010 (Ciba) aufgeschmolzen und granuliert.
Während der Pfropfreaktion wurden keine Anbackungen im Reaktor beobachtet, es wurde ein homogenes Produkt mit einem Ausstoß von 250kg/h erhalten.

Das Styrol-gepfropfte Polypropylen wies folgende Kennwerte auf:

| | |
|---|---|
| MFI (melt flow index bei 230°C/2,16 kg) | 2 dg/min |
| E-Modul (DIN 53452/57) | 2100 MPa |
| Polystyrolanteil | 10 Ma% gepfropft |
| | 8 Ma% Homopolymer |

Die Messung des Polystyrolanteils erfolgte durch Extraktion mit Dichlorethan über 24 h bei Siedehitze in einer Soxhlet-Apparatur. Nach Abschluß der Extraktion wurden die Proben unter Vakuum bis zur Gewichtskonstanz getrocknet.

### Beispiele 2 und 3:

Analog zu Beispiel 1 wurde ein mit Styrol gepfropftes Polypropylen hergestellt, wobei jedoch die in Tabelle 1 angeführten Verfahrensparameter angewendet wurden. Als Radikalbildner wurde in Beispiel 3 t-Butylperoxybenzoat eingesetzt.

Es wurden keine Anbackungen im Reaktor festgestellt. Die erhaltenen Produkte waren homogen und wiesen die in Tabelle 2 angeführten Eigenschaftswerte auf.

### Vergleichsbeispiel V1:

Analog zu Beispiel 1 wurde ein mit Styrol gepfropftes Polypropylen hergestellt, wobei jedoch im Kreislaufgas an Stelle von Wasserdampf Stickstoff eingesetzt und die in Tabelle 1 angeführten Verfahrensparameter angewendet wurden. Als Radikalbildner wurde t-Butylperoxybenzoat eingesetzt.
Das erhaltene Produkt war sehr inhomogen. Aufgrund von Anbackungen am Reaktor mußte die Anlage nach 6 Stunden außer Betrieb genommen werden.

**Tabelle 1**

| Pfropfbedingungen | | | | | | |
|---|---|---|---|---|---|---|
| **Beispiel** | **Zusammensetzng des Kreislaufgases** | | **Reaktionsbedingungen im Pfropfreaktor** | | | |
| | Komponente | Mol-prozent | Temperatur in °C | Druck in bar | mittlere Verweilzeit in min | Kreisgasmenge in m³/h |
| **1** | Wasser | **40** | **110** | **0.19** | **60** | **950** |
| | Stickstoff | | | | | |
| | Styren | **58** | | | | |
| | Hexanoat | **2** | | | | |
| | Benzoat | | | | | |
| **2** | Wasser | **87** | **140** | **0.89** | **120** | **990** |
| | Stickstoff | | | | | |
| | Styren | **13** | | | | |
| | Hexanoat | | | | | |
| | Benzoat | | | | | |
| **3** | Wasser | **87** | **130** | **0.89** | **50** | **970** |
| | Stickstoff | | | | | |
| | Styren | **10** | | | | |
| | Hexanoat | | | | | |
| | Benzoat | **3** | | | | |
| **Vergleichsbeispiel** | Wasser | | **130** | **0.89** | **70** | **1100** |
| | Stickstoff | **65** | | | | |
| | Styren | **34** | | | | |
| | Hexanoat | | | | | |
| | Benzoat | **1** | | | | |

**Tabelle 2**

| Produktkennwerte | | | | |
|---|---|---|---|---|
| Beispiel | MFI∗ (dg/min) | E-Modul (MPa) | Polystyrolanteil (Ma%) | |
| | | | gepfropft | Homopolymer |
| 1 | 2 | 2100 | 10 | 8 |
| 2 | 2 | 1900 | 8 | 3 |
| 3 | 2 | 2030 | 10 | 8 |
| V1 | inhomogenes Produkt, stark schwankende Werte | | | |

| | | | | |
|---|---|---|---|---|
| * 230°C/2,16 kg (DIN 53735) | | | | |

## Patentansprüche

1. Verfahren zur Herstellung von gepfropften Polyolefinen, bei dem ethylenisch ungesättigte Pfropfmonomere und gegebenenfalls Radikalbildner mit festen Polyolefinteilchen, die ein Fließbett bilden, in Kontakt gebracht werden, dadurch gekennzeichnet, daß das Polyolefin-Fließbett durch Einblasen von Wasserdampf und gegebenenfalls von C₁- bis C₈-Alkanoldämpfen fluidisiert wird.

2. Verfahren gemäß Anspruch 1, dadurch gekennzeichnet, daß der Dampf aus einem Gemisch von 0,1 bis 1,0, bevorzugt 0,4 bis 1,0 Gewichtsteilen Wasser und 0 bis 0,9, bevorzugt 0 bis 0,5 Gewichtsteilen Alkanol besteht.

3. Verfahren gemäß Anspruch 1 oder 2, dadurch gekennzeichnet, daß die Pfropfmonomeren und gegebenenfalls Radikalbildner gemeinsam mit dem Dampf in das Fließbett eingeblasen werden.

4. Verfahren gemäß einem der Ansprüche 1 bis 3, dadurch gekennzeichnet, daß als Polyolefine Polypropylene oder Propylen-Ethylen-Copolymere eingesetzt werden.

5. Verfahren gemäß einem der Ansprüche 1 bis 4, dadurch gekennzeichnet, daß als Pfropfmonomere Verbindungen aus der Gruppe der ungesättigten Carbonsäuren bzw. deren Derivaten, der Vinyl- oder Divinylaromaten und aliphatischen Diene eingesetzt werden.

6. Verfahren gemäß einem der Ansprüche 1 bis 5, dadurch gekennzeichnet, daß die gepfropften Polyolefine aufgeschmolzen und mit Maleinsäureanhydrid, bevorzugt als Lösung in einem leicht flüchtigen Lösungsmittel, in Kontakt gebracht werden.

## Claims

1. Process for the preparation of grafted polyolefins in which ethylenically unsaturated grafting monomers and, if appropriate, agents which form free radicals are brought into contact with solid polyolefin particles which form a fluidized bed, characterized in that the polyolefin fluidized bed is fluidized by blowing in steam and, if appropriate, C₁- to C₈-alkanol vapours.

2. Process according to Claim 1, characterized in that the vapour comprises a mixture of 0.1 to 1.0, preferably 0.4 to 1.0 part by weight of water and 0 to 0.9, preferably 0 to 0.5 part by weight of alkanol.

3. Process according to Claim 1, characterized in that the grafting monomers and, if appropriate, agents which form free radicals are blown into the fluidized bed together with the vapour.

4. Process according to one of Claims 1 to 3, characterized in that polypropylenes or propylene/ethylene copolymers are employed as the polyolefins.

5. Process according to one of Claims 1 to 4, characterized in that compounds from the group consisting of unsaturated carboxylic acids and derivatives thereof, the vinyl- or divinylaromatics and aliphatic dienes are employed as the grafting monomers.

6. Process according to one of Claims 1 to 5, characterized in that the grafted polyolefins are melted and brought into contact with maleic anhydride, preferably as a solution in a readily volatile solvent.

## Revendications

1. Procédé de préparation de polyoléfines greffées, dans lequel on amène des monomères de greffage éthyléniquement insaturés et éventuellement des formateurs de radicaux au contact de particules solides de polyoléfines qui forment un lit fluidisé, caractérisé en ce qu'on fluidifie le lit fluidisé de polyoléfines par barbotage de vapeur d'eau et éventuellement de vapeurs d'alcanols en C₁ à C₈.

2. Procédé selon la revendication 1, caractérisé en ce que la vapeur est formée d'un mélange de 0,1 à 1,0, de préférence de 0,4 à 1,0, partie en poids d'eau, et 0 à 0,9, de préférence 0 à 0,5, partie en poids d'alcanol.

3. Procédé selon la revendication 1 ou 2, caractérisé en ce qu'on fait barboter les monomères de greffage et éventuellement les formateurs de radicaux conjointement avec la vapeur dans le lit fluidisé.

4. Procédé selon l'une des revendications 1 à 3, caractérisé en ce qu'on utilise, comme polyoléfines, des polypropylènes ou des copolymères de propylène-éthylène.

5. Procédé selon l'une des revendications 1 à 4, caractérisé en ce qu'on utilise, comme monomères de greffage, des composés choisis dans l'ensemble constitué par les acides carboxyliques insaturés et leurs dérivés, les composés aromatiques vinyliques ou divinyliques et les diènes aliphatiques.

6. Procédé selon l'une des revendications 1 à 5, caractérisé en ce qu'on fait fondre les polyoléfines greffées et on les amène au contact d'anhydride maléique, de préférence en solution dans un solvant très volatil.
